(19) Europäisches Patentamt / European Patent Office / Office européen des brevets

(11) **EP 2 796 707 A1**

(12) **EUROPEAN PATENT APPLICATION**

(43) Date of publication:
**29.10.2014 Bulletin 2014/44**

(51) Int Cl.:
***F03B 7/00*** *(2006.01)*

(21) Application number: **14165312.1**

(22) Date of filing: **18.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.04.2013 IT TO20130326**

(71) Applicant: **Micro Hydro Innovation S.r.l.**
**15121 Alessandria (IT)**

(72) Inventors:
• **Ferraris, Paolo**
  **I-15121 Alessandria (IT)**
• **Buffa, Enzo**
  **I-15121 Alessandria (IT)**

(74) Representative: **Marchitelli, Mauro et al**
**Buzzi, Notaro & Antonielli d'Oulx Srl**
**Via Maria Vittoria 18**
**10123 Torino (IT)**

(54) **Hydroelectric plant with an Archimedean screw rotor**

(57)     A hydroelectric plant comprising:
- a load channel (12) for an inlet water flow (14),
- a return basin (18) for the collection of an outlet water flow (20),
- an inclined channel (24) disposed between the load channel (12) and the return basin (18),
- an Archimedean screw (26) rotatably mounted in said inclined channel (24) about an axis of rotation (X) inclined with respect to a horizontal plane,
wherein the positioning of the Archimedean screw (26), with respect to the free surface of the inlet water flow to the Archimedean screw (26), and with respect to the free surface of the return basin, is defined in such a way as to optimize the efficiency of the plant.

FIG. 1

EP 2 796 707 A1

**Description**

Field of the invention

The present invention relates to a hydroelectric plant with an Archimedean screw rotor equipped with a certain number of helicoids orthogonal to the axis of rotation.

More specifically, the invention relates to a hydroelectric plant comprising a load channel for an inlet water flow, a return basin for the collection of an outlet water flow, an inclined channel of semicircular section formed by a half-cylindrical trough disposed between the load channel and the return basin, and an Archimedean screw rotatably mounted in the inclined channel (with a minimum clearance between the outer edge of the helicoids and the inner surface of the trough) and rotating about an inclined axis of rotation coinciding with the axis of the trough.

Description of the prior art

In recent years, micro hydroelectric power plants with Archimedean screw rotors have been proposed. These types of micro hydroelectric power plants are usually used for power in the order of 10-100 kW, with water flow rates in the order of 0.5-3 $m^3$/s, and with a hydraulic head in the order of 1-6 m.

Designing of Archimedean screw rotors for hydroelectric power plants of this type is essentially based on empirical and imitative design approaches. The technical literature regarding the aspects for an optimal design of a hydroelectric plant with an Archimedean screw rotor is virtually non-existent.

An Archimedean screw is essentially formed by an inner cylinder from which one or more helicoids protrude. The main geometrical parameters of an Archimedean screw are the outer diameter and the inner diameter of the helicoids, the active length of the Archimedean screw, the number of the helicoids or number of principles N, the pitch of the helicoids and the inclination of the axis of rotation of the Archimedean screw.

The design aspects that influence the overall efficiency of a hydroelectric plant with an Archimedean screw rotor are manifold. The overall efficiency of the plant depends on the dimensioning of the geometric parameters of the Archimedean screw, and by the positioning of this with respect to the levels of the free surface of the inlet and outlet water.

Studies conducted by the Applicant have shown that the position of the average level of the free surface of the inlet flow, and the position of the average free surface of the outlet collection basin have a crucial impact on the efficiency of the plant.

Object and summary of the invention

The present invention aims to define the design criteria to be used for the positioning of the Archimedean screw with respect to the free surface of the inlet water flow to the Archimedean screw, and with respect to the free surface of the return basin, to obtain optimal efficiency of the plant.

According to the present invention, this object is achieved by a hydroelectric plant with an Archimedean screw having the characteristics forming the subject of the claim.

The claim forms an integral part of the disclosure given in relation to the invention.

Brief description of the drawings

The present invention will now be described in detail with reference to the accompanying drawings, given purely by way of non-limiting example, wherein:

- Figure 1 is a schematic axial section of a hydroelectric plant with an Archimedean screw rotor,
- Figure 2 is a schematic perspective view of the inlet side of the Archimedean screw indicated by the arrow II in Figure 1,
- Figure 3 is a schematic perspective view of the outlet side of the Archimedean screw indicated by the arrow III in Figure 1,
- Figure 4 is a view on a larger scale of the line A-A' of Figure 2,
- Figure 5 is an enlarged detail of the line portion of indicated by the arrow V in Figure 4,
- Figure 6 is a view on a larger scale of the line D-D' of Figure 3, and
- Figure 7 is a detail on a greater scale of the line portion indicated by the arrow VII in Figure 6.

Detailed description of the invention

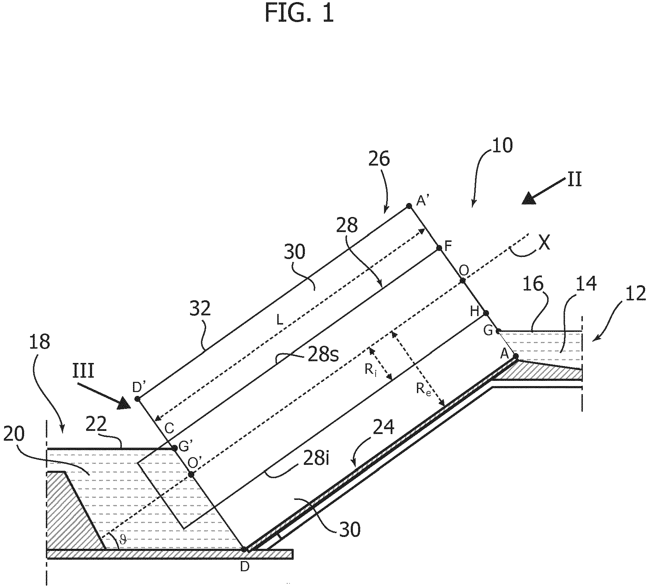

With reference to Figure 1, numeral 10 indicates a hydroelectric plant with an Archimedean screw rotor according to the present invention. The hydroelectric plant 10 comprises a load channel 12 into which an inlet water flow 14 flows, having a free surface 16 at the inlet of the Archimedean screw. The plant 10 comprises a return basin 18 located at a lower height with respect to the height of the load channel 12. In the return basin 18, an outlet water flow 20 collects, having a free surface 22. An inclined channel 24 connects the load channel 12 to the return basin 18.

An Archimedean screw 26 is rotatably mounted in the inclined channel 24. The Archimedean screw 26 is rotatable about an axis of rotation X inclined by an angle θ with respect to a horizontal direction. The Archimedean screw 26 comprises an inner cylinder 28 coaxial with the axis X, on the outer surface of which a plurality of helicoids are fixed, occupying the total space represented by the two rectangles 30 in Figure 1. The helicoids 30 are of the orthogonal type. Each helicoid is ideally generated by a segment of a straight line with its origin on the axis X of the cylinder 28 and orthogonal to the axis X, which presents an angular rotation advancing along the axis X proportional to the rotation. The advancing along the axis X, which corresponds to a rotation of 360°, is defined as the pitch of the helix (and of the helicoid). The inner cylinder 28 can be ideally divided into an upper half-cylinder $28_s$ and a lower half-cylinder $28_i$, located above and below the axis of rotation X, respectively.

In Figures 1 to 3, numeral 32 indicates an imaginary cylinder tangent to the radially outer ends of the helicoids 30. In Figure 1, $R_e$ indicates the radius of the cylinder 32, while $R_i$ indicates the radius of the inner cylinder 28. The dimension in the radial direction of the helicoids 30 is therefore equal to: $R_e$-$R_i$.

The Archimedean screw 26 has a number N of principles, i.e. it is equipped with N helicoids axially spaced between each other. The distance in the axial direction between the homologous points of different helicoids 30 is equal to P/N, where P is the pitch of each helicoid 30 and N is the number of helicoids. The number N of helicoids considered is between 2 and 5.

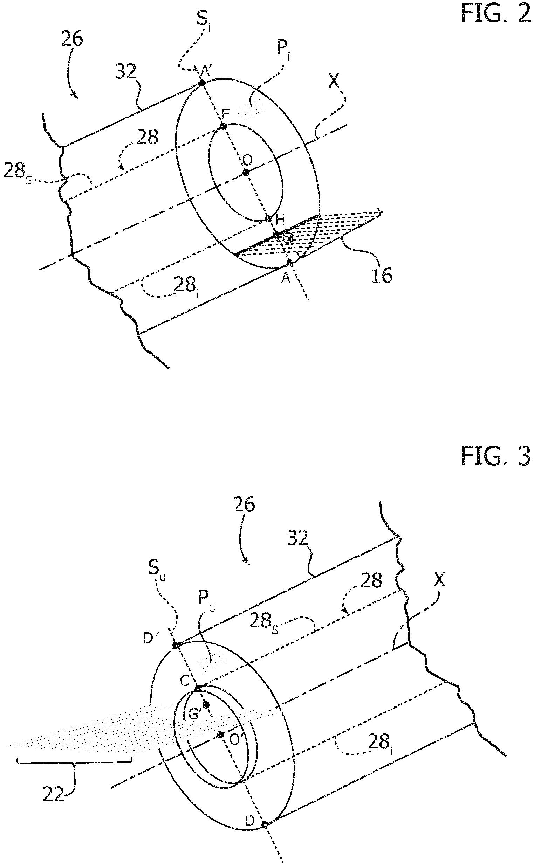

With reference to Figure 2, $P_i$ indicates the inlet front plane of the Archimedean screw 26, defined as the plane orthogonal to the axis of rotation X in which the beginnings, in the axial orientation of the helicoids 30 of the Archimedean screw 26, lie. In the plane $P_i$, an inlet reference line, $S_i$, is identified, defined by the intersection between the inlet front plane Pi and a vertical plane passing through the axis of rotation X of the Archimedean screw 26.

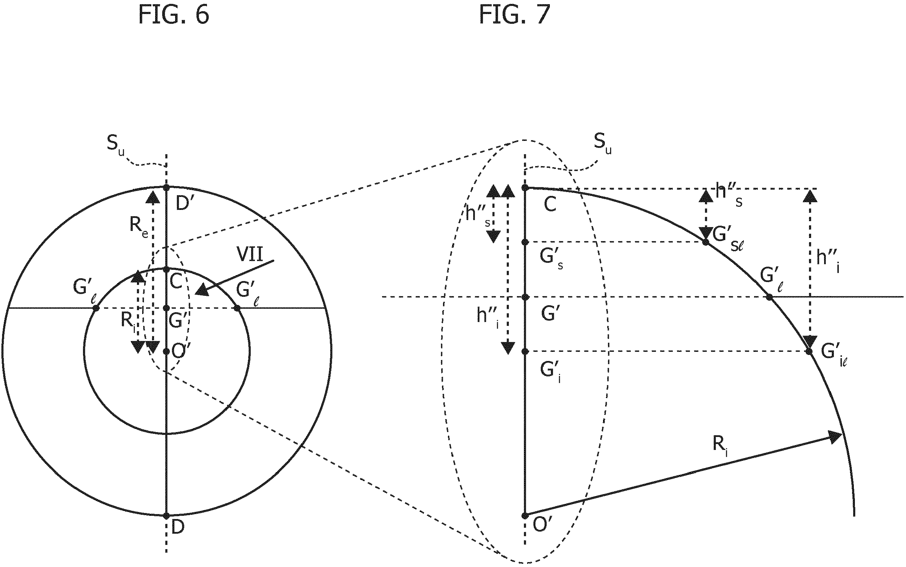

It is important to specify that the cylinder 28 has extensions at its two ends, beyond the area equipped with helicoids (active part) to enable the supporting of the system with suitable supports or bearings. For this reason, some cited planes or lines are not immediately viewable, as well as some points that will be introduced below, and the location of which will be specified to define the quality of the design solution. These positions are, of course, geometrically determinable, by indirect means, through the references established; for example, for the point G', this can be achieved through the symmetric points $G'_\ell$ (Fig. 6) and points $G'_{s\ell}$ and $G'_{i\ell}$ (Fig. 7) and the relative distances from the height of the point C ($h''_s$ and $h''_s$) measured along the line $S_i$.

On the inlet reference line $S_i$, the following points are identified:

- A, A': intersection points between the inlet reference line $S_i$ with the cylinder 32, tangent to the outer ends of the helicoids 30;
- F, H: intersection points between the inlet reference line $S_i$ and the upper inner half-cylinder $28_s$ and the lower inner half-cylinder $28_i$,
- O: intersection point between the line $S_i$ and the axis of rotation X,
- G: intersection point between the line $S_i$ and the median plane 16 of the free surface (which is not very regular), of the water flow at the inlet of the Archimedean screw.

Since the flow rate of the inlet water flow 14 is subject to variation, the position of the free surface of the inlet water flow is considered as that which corresponds to the maximum expected operating flow rate (or "planned").

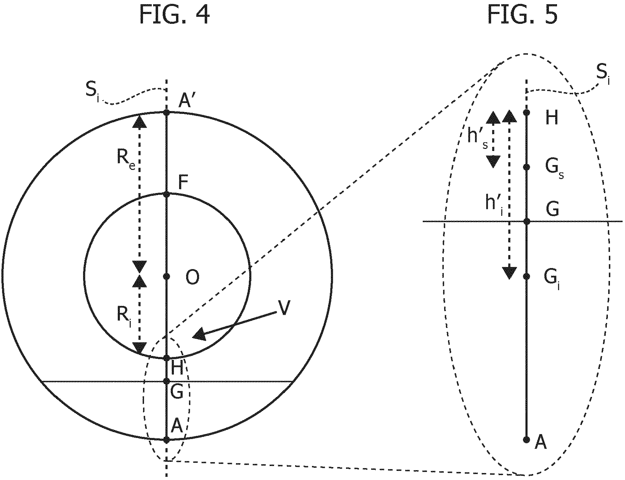

With reference to Figures 4 and 5, according to the present invention, to obtain conditions of maximum efficiency of the plant, the position of the point G on the line A-A' must be within the range defined by the points $G_s$ and $G_i$ (Figure 5), the position of which is defined below. The points $G_s$ and $G_i$ that define the upper and lower ends of the segment, within which the position of the point G must fall, are located below the point H. The distances of the points $G_s$ and $G_i$ with respect to the point H (intersection of the lower inner half-cylinder $28_i$ with the inner reference line $S_i$) are indicated by $h'_s$ and $h'_i$. The values of $h'_s$ and $h'_i$ are determined by the following expressions:

$$h'_s = R_i \times [0{,}869 - K^{*'}_s]$$

$$h'_i = R_i \times [0{,}869 - K^{*'}_i]$$

where the values of the parameters $K^{*'}_s$ and $K^{*'}_i$ are reported in the following table as a function of the number N of principles:

| N | $K^{*'}_s$ | $K^{*'}_i$ |
|---|---|---|
| 2 | 0.8059 | 0.3628 |
| 3 | 0.8 | 0.3602 |
| 4 | 0.7923 | 0.3567 |
| 5 | 0.7842 | 0.3531 |

With reference to Figure 3, $P_u$ indicates the plane orthogonal to the axis X in which which the outlet ends of the helicoids of the Archimedean screw 26 lie, in an axial orientation. The plane $P_u$ is parallel to the plane $P_i$, and they are spaced from each other by a length L (Figure 1), which represents the active length of the Archimedean screw 26.

On the outlet plane $P_u$, an outlet reference line $S_u$ is identified, defined by the intersection of the outlet front plane $P_u$ with a vertical plane passing through the axis of rotation X

With reference to Figures 6 and 7, on the outlet reference line $S_u$, the following points are identified:

- D', D: intersection points of the outlet reference line $S_u$ with the outer cylinder 32,
- O': intersection of the outlet reference line $S_u$ with

the axis of rotation X,
- C: intersection of the outlet reference line $S_u$ with the upper inner half-cylinder $28_s$,
- G': intersection of the horizontal median plane 22 of the free surface of the outlet water flow (return basin) imposed from the outside, with the outlet reference line $S_u$.

In this case as well, the median plane of the free surface of the outlet water flow 22 is defined as the average position of the points belonging to the free surface 22 and to the plane $P_u$.

It should be noted that, in normal operation, out of the points present, only the points D' and C are visible; the others are hidden by the presence of the extension of the tube 28 (Fig. 1), which constitutes the element necessary for reaching the lower support. As previously described, again with reference to Figures 6 and 7, the position of the point G' is measureable through visible points on the surface of the cylinder 28s.

With reference to Figure 7, to optimize the efficiency of the plant, the point G' is positioned in the interval between the points $G'_s$ and $G'_s$, located on the outlet reference line $S_u$, below the point C. The distance of the points $G'_s$ and $G'_i$, with respect to the point C, is indicated by $h''_s$ and $h''_i$. The values $h''_s$ and $h''_i$ are defined by the following expressions:

$$h''_s = R_i \times K^{*''}_s$$

$$h''_i = R_i \times K^{*''}_i$$

where the values of the parameters $K^{*'}_s$ and $K^{*'}_i$ are defined in the following table as a function of the number N of principles:

| N | $K^{*''}_s$ | $K^{*''}_i$ |
|---|---|---|
| 2 | 0.04992 | 0.3432 |
| 3 | 0.07168 | 0.4928 |
| 4 | 0.08896 | 0.6116 |
| 5 | 0.10288 | 0.7073 |

The efficiency of the Archimedean screw is optimal if both the optimization condition of the inlet flow and the optimization condition of the outlet flow are met. However, it is also possible to optimize the positioning of the Archimedean screw with reference to just the inlet flow or with reference to just the outlet flow.

Of course, without prejudice to the principle of the invention, the details of construction and the embodiments may vary widely with respect to those described and illustrated without departing from the scope of the invention as defined by the following claim.

**Claims**

1. hydroelectric plant comprising:

    - a load channel (12) for an inlet water flow (14),
    - a return basin (18) for the collection of an outlet water flow (20),
    - an inclined channel (24) disposed between the load channel (12) and the return basin (18),
    - an Archimedean screw (26) rotatably mounted in said inclined channel (24) about an axis of rotation (X) inclined with respect to a horizontal plane,

    wherein the Archimedean screw (26) has an inner cylinder (28) having a radius $R_i$, from which a plurality N of helicoids (30) protrudes, wherein said inner cylinder (28) is subdivided into an upper half-cylinder ($28_s$) and a lower half-cylinder ($28_i$), located above and below the axis of rotation (X), respectively,
    wherein the Archimedean screw (26) has an ideal inlet front plane ($P_i$) orthogonal to the axis of rotation (X) and in which the inlet ends of said helicoids (30) lie, and an ideal outlet front plane ($P_u$) orthogonal to the axis of rotation (X) and in which the outlet ends of said helicoids lie,
    wherein in the ideal inlet front plane ($P_i$), an ideal inlet reference line ($S_i$) lies, defined by the intersection of the ideal inlet front plane ($P_i$) with a vertical plane passing through the axis of rotation (X), and wherein in the ideal front outlet plane ($P_u$), an ideal outlet reference line ($S_u$) lies, defined by the intersection of the ideal front outlet plane ($P_u$) with the vertical plane passing through the axis of rotation (X),
    wherein on the ideal inlet reference line ($S_i$), an inlet reference point (H) is located, defined by the intersection of the lower inner half-cylinder ($28_i$) with the ideal inlet reference line ($S_i$) and an inlet level point (G), defined by the intersection of the median plane (16) of the free surface of the inlet water flow (24) with the ideal inlet reference line ($S_i$), and
    wherein on the outlet reference line ($S_u$) an outlet reference point (C) is located, defined by the intersection of the upper inner half-cylinder ($28_s$) with the ideal outlet reference line ($S_u$) and an outlet level point (G') defined by the intersection of the median plane (22) of the horizontal free surface of the outlet water flow (22) with the ideal outlet reference line ($S_u$),
    **characterized in that** said inlet level point (G) is located within a range defined between two points ($G_s$ and $G_i$) located on the ideal inlet reference line ($S_i$) below said inlet reference point (H) at respective distances ($h'_s$, $h'_i$) from the inlet reference point (H) defined by the following relations:

$$h'_s = R_i \times [0{,}869 - K^{*'}{}_s]$$

$$h'_i = R_i \times [0{,}869 - K^{*'}{}_i]$$

where the values of the parameters $K^{*'}{}_s$ and $K^{*'}{}_i$ are defined in the following table as a function of the number N of helicoids:

| N | $K^{*'}{}_s$ | $K^{*'}{}_i$ |
|---|--------------|--------------|
| 2 | 0.8059 | 0.3628 |
| 3 | 0.8 | 0.3602 |
| 4 | 0.7923 | 0.3567 |
| 5 | 0.7842 | 0.3531 |

and/or by the fact that said outlet level point (G') is located within a range defined by two points (G'$_s$, G'$_i$) located on the ideal outlet reference line (S$_u$) below said outlet reference point (C) at respective distances h"$_s$, h"$_i$ from said outlet reference point (C) defined by the following relations:

$$h''_s = R_i \times K^{*''}{}_s$$

$$h''_i = R_i \times K^{*''}{}_i$$

where the values of the parameters $K^{*''}{}_s$ and $K^{*''}{}_i$ are defined in the following table as a function of the number N of helicoids:

| N | $K^{*''}{}_s$ | $K^{*''}{}_i$ |
|---|---------------|---------------|
| 2 | 0.04992 | 0.3432 |
| 3 | 0.07168 | 0.4928 |
| 4 | 0.08896 | 0.6116 |
| 5 | 0.10288 | 0.7073 |

EP 2 796 707 A1

# FIG. 1

FIG. 2

FIG. 3

FIG. 4

FIG. 5

FIG. 6

FIG. 7

EP 2 796 707 A1

Europäisches
Patentamt

European
Patent Office

Office européen
des brevets

# EUROPEAN SEARCH REPORT

Application Number

EP 14 16 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DIRK M NUERNBERGK: "Analytical Model for Water Inflow of an Archimedes Screw Used in Hydropower Generation", JOURNAL OF HYDRAULIC ENGINEERING, AMERICAN SOCIETY OF CIVIL ENGINEERS, NEW YORK, NY, US, vol. 139, no. 2, 1 February 2013 (2013-02-01), pages 213-220, XP008166519, ISSN: 0733-9429, DOI: 10.1061/(ASCE)HY.1943-7900.0000661 [retrieved on 2012-07-23] * page 214, column 2, lines 8-17 * * page 217, column 2, line 10 - page 218, column 2, line 13; figure 6 * ----- | 1 | INV. F03B7/00 |
| A | EP 2 278 156 A1 (REHART GMBH [DE]) 26 January 2011 (2011-01-26) * paragraphs [0007] - [0009], [0018], [0029], [0031] - [0033], [0036] - [0042]; figure 1 * ----- | 1 | |
| A | DE 41 39 134 A1 (RADLIK KARL AUGUST [DE]) 11 June 1992 (1992-06-11) * column 2, line 21 - column 3, line 16; figures 1-4 * ----- | 1 | TECHNICAL FIELDS SEARCHED (IPC) F03B |

The present search report has been drawn up for all claims

| Place of search | Date of completion of the search | Examiner |
|---|---|---|
| Munich | 14 August 2014 | Jucker, Chava |

EPO FORM 1503 03.82 (P04C01)

**ANNEX TO THE EUROPEAN SEARCH REPORT
ON EUROPEAN PATENT APPLICATION NO.**

EP 14 16 5312

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2014

| Patent document cited in search report | | Publication date | Patent family member(s) | Publication date |
|---|---|---|---|---|
| EP 2278156 | A1 | 26-01-2011 | NONE | |
| DE 4139134 | A1 | 11-06-1992 | NONE | |

EPO FORM P0459

For more details about this annex : see Official Journal of the European Patent Office, No. 12/82